# EUROPEAN PATENT APPLICATION

(11) **EP 4 691 688 A1**
(43) Date of publication of application: **11.02.2026**
(21) Application number: 25192650.7
(22) Date of filing: 29.07.2025
(51) Int. Cl.: B23Q 1/03, B27M 1/08

(54) **WORKING CENTER, CLAMPING UNIT FOR SUCH WORKING CENTER, AND METHOD OF OPERATING THE WORKING CENTER**

(30) Priority: 09.08.2024 IT 202400018832
(71) Applicant: SCM Group S.p.A., 47921 Rimini (RN) (IT)
(72) Inventor: VANNUCCI, Carlo, 47921 RIMINI (IT); BERTUCCIOLI, Alessandro, 47921 RIMINI (IT)
(74) Representative: Tiburzi, Andrea

(57) **Abstract**

The present invention relates to a Working center (1) for machining workpieces (P) such as wood panels, solid wood beams, plastic, fiberglass, and the like, comprising: a bar table (2), comprising a plurality of bars (21), intended to support the workpieces (P) to be machined; a machining unit (3) arranged above said bar table (2) and movable relative to it, wherein said machining unit (3) comprises at least one machining tool (31) for machining said workpieces (P) fixed on said bar table (2); and a plurality of clamping units (4, 4'), slidably coupled to one of said bars (21) of said bar table (2), wherein each of said clamping units (4, 4') is suitable for clamping a workpiece (P) to be machined by said machining unit (3).

The present invention also relates to a clamping unit (4, 4') and a method of operation (100) of the working center (1).

## Description

The present invention relates to an improved working center, a clamping unit for such working center and a method of operating the working center.

### Field of invention

More specifically, the invention concerns a working center of the aforementioned type, designed and realized specifically to accelerate productivity in the machining of solid wood panels or beams, but which can be used in any area where it is necessary to increase production speed.

In the following, the description will be aimed at working centers for the production of solid wood beams, but it is clear that the same should not be considered limited to this specific use.

### Prior art

As is well known, the working of solid wooden beams or panels on worktops requires the pieces to be clamped using specific clamping devices, such as clamps or vacuum suction cups.

These devices are designed to keep the wooden beam to be machined still while the machining operations are carried out on one or more of its sides or surfaces by means of machining heads.

Typically, clamping devices are used to hold the beam in place so that the free side opposite the clamped or clamped side is machined.

However, this configuration presents technical challenges. When machining multiple sides or surfaces of the workpiece, it is essential to use multiple clamping devices (typically clamps) that can secure the panel alternately on different sides. This requirement slows down production due to the movement of the clamping devices, as each change in the workpiece's machining side requires repositioning and re-clamping the workpiece, thus requiring the use of additional clamps.

Furthermore, the need to use multiple locking devices translates into higher production costs, both in terms of purchasing additional equipment and in terms of its maintenance.

These factors contribute to an overall increase in working times and costs, negatively impacting production efficiency.

### Purpose of the invention

In light of the above, it is therefore the purpose of the present invention to provide a clamping system for the machining of solid workpieces on worktables which reduces the number of clamping elements, thus improving the efficiency of handling during machining on different sides of the workpiece.

Another aim of the invention is to reduce the operating costs associated with the purchase and maintenance of numerous clamping devices, proposing a more economical and less resource-intensive solution.

It is also the purpose of the present invention to increase productivity by reducing tooling and setup times, thus allowing for faster and more continuous processing.

### Object of the invention

It is, therefore, specific object of the present invention a working center for machining workpieces such as wood panels, solid wood beams, plastic, fiberglass, and the like, comprising: a bar table, comprising a plurality of bars, intended to support the workpieces to be machined; a machining unit arranged above said bar table and movable relative to it, wherein said machining unit comprises at least one machining tool for machining said workpieces fixed on said bar table; and a plurality of clamping units, slidably coupled to one of said bars of said bar table, wherein each of said clamping units is suitable for clamping a workpiece to be machined by said machining unit; characterized in that each of said clamping units comprises: a main base, slidably coupled to a respective bar of said bar table; a support base, having a support surface, for supporting a workpiece to be clamped and machined, wherein said support surface, when the workpiece is supported on it, defines a passage plane, a clamp for clamping said workpiece, having a clamping surface, which can be positioned facing said support surface, wherein said clamp is movable relative to said support base, to assume a clamping position, in which it clamps the workpiece to be machined between said support surface of said support base and said clamping surface, and a release position, and wherein said clamping unit assumes a contracted position in which said clamp is located below said passage plane, so as to pass or be positioned under said workpiece when it is positioned on the support surface of said support base.

Always according to the invention, said clamp may comprise a plate, on which said clamping surface is provided, and a stem, coupled to said plate, for moving said clamp relative to said support base along a direction, wherein said direction is perpendicular or oblique to said surface defined by said support surface.

Still according to the invention, said clamp may be rotatable relative to said main base around a rotation axis arranged perpendicularly to said bar table.

Advantageously according to the invention, said main base may rotate around said support base, around an additional rotation axis parallel to said rotation axis of said clamp.

Further according to the invention, said main base may comprise a body and a slide fixed to said body, slidably couplable to a bar.

Preferably according to the invention, said support base of said clamping unit may be coupled to said main base and is slidable relative to said body, so as to assume a lowered position, in which it is near said main base, and a raised position, in which it is spaced from said main base, and when said clamp is in said contracted position and said support base is in said lowered position, said clamping unit may be able to pass or be positioned below said passage plane, so as to pass or be positioned under said workpiece when it is positioned on the support surface of said support base.

Always according to the invention, said clamp may be coupled to said main base, to assume said clamping position, in which it clamps the workpiece to be machined between said support surface of said support base and said clamping surface, and a release position, and said support base may be slidably coupled to a respective bar of said bar table.

Still according to the invention, said working center may comprise a base, on which said bar table is arranged, a bridge, movable relative to said base along a movement direction, comprising a crossbeam, arranged perpendicularly to said movement direction, wherein said bar table is arranged below said crossbeam, a rail, arranged on said crossbeam, wherein said machining unit is slidably movable on said rail.

It is also further object of the present invention a clamping unit for clamping workpieces such as wood panels, solid wood beams, plastic, fiberglass, and the like, couplable to a working center comprising a bar table having a plurality of bars, intended to support the workpieces to be machined, comprising: a main base, slidably coupled to a respective bar of said bar table; a support base, having a support surface, for supporting a workpiece to be clamped and machined, wherein said support surface, when the workpiece is supported on it, defines a passage plane, and a clamp for clamping said workpiece, having a clamping surface, which can be positioned facing said support surface, wherein said clamp is movable relative to said support base, so as to assume a clamping position, in which it clamps the workpiece to be machined between said support surface of said support base and said clamping surface, and a release position, and wherein said clamp is configured to assume a contracted position, in which said clamp is located below said passage plane, so as to pass or be positioned under said workpiece when it is positioned on the support surface of said support base.

Always according to the invention, said clamp may comprise a plate on which said clamping surface is provided, and a stem, coupled to said plate, for moving said clamp relative to said support base along a direction, wherein said direction is perpendicular to said surface defined by said support surface.

Still according to the invention, said clamp may be rotatable relative to said main base around a rotation axis arranged perpendicularly to said bar table.

Advantageously according to the invention, said main base may comprise a body and a slide fixed to said body, slidably couplable to a bar.

Preferably according to the invention, said support base of said clamping unit may be coupled to said main base and is slidable relative to said body, so as to assume a lowered position, in which it is near said main base, and a raised position, in which it is spaced from said main base, and when said clamp is in said contracted position and said support base is in said lowered position, said clamping unit may be able to pass or be positioned below said passage plane, so as to pass or be positioned under said workpiece when it is positioned on the support surface of said support base.

Further according to the invention, said clamp may be coupled to said main base, to assume said clamping position, in which it clamps the workpiece to be machined between said support surface of said support base and said clamping surface, and a release position, and said support base is slidably coupled to a respective bar of said bar table.

It is also object of the present invention a camping method for clamping a workpiece on a work table of a working center as defined above, comprising the following steps: placing a workpiece, such as a wooden beam, on the support bases of two or more clamping units; clamping said workpiece to be machined by means of said two or more clamping units by positioning the respective clamps in said clamping position; moving from said clamping position to said release position the clamp of at least one of said clamping units; assuming a contracted position by means of said one or more clamping units of the previous step; moving the main base of said at least one of said clamping units in said contracted position under said passage plane and thus under said workpiece; bringing the main base of at least one of said clamping units moved in said moving step to said workpiece to be machined; and moving said clamp corresponding to said main base of at least one of said clamping units brought to said workpiece in said bringing step, from said release position to said clamping position.

Always according to the invention, in said moving step said support base may be positioned in said lowered position.

Still according to the invention, said moving step may comprise the sub-step of rotating said clamp.

### Brief description of the figures

The present invention will be now described, for illustrative but not limitative purposes, according to its preferred embodiments, with particular reference to the figures of the enclosed drawings, wherein:
figure 1 shows a perspective view of a working center for working solid wood panels, according to the present invention;
figure 2 shows a side view of a first embodiment of the clamping unit according to the present invention;
figure 3 shows a flow chart of the operating method of the working center according to the present invention;
figure 4 shows a perspective view of a bar plane in which the clamping units according to figure 2 are arranged in a first configuration;
figure 5 shows a perspective view of a bar plane in which clamping units according to figure 2 are arranged in a second configuration;
figure 6 shows a perspective view of a bar plane in which the clamping units according to figure 2 are arranged in a third configuration;
figure 7 shows a perspective view of a bar plane in which the clamping units according to figure 2 are arranged in a fourth configuration;
figure 8 shows a user configuration for positioning a workpiece on two clamping units;
figure 9 shows a side view of a second embodiment of the clamping unit according to the present invention;
figure 10 shows aperspective view of a bar plane in which clamping units are arranged according to figure 9 in a first configuration;
figure 11 shows aperspective view of a bar plane, in which the clamping units according to figure 9 are arranged in a second configuration;
figure 12 shows aperspective view of a bar plane, in which the clamping units according to figure 9 are arranged in a third configuration;
figure 13 shows aperspective view of a bar plane, in which the clamping units according to figure 9 are arranged in a fourth configuration;
figure 14 shows aperspective view of a bar plane, in which the clamping units according to figure 9 are arranged in a fifth configuration; and
figure 15 shows the arrangement of two clamping units according to figure 9.

### Detailed description

In the various figures, similar parts will be indicated with the same numerical references.

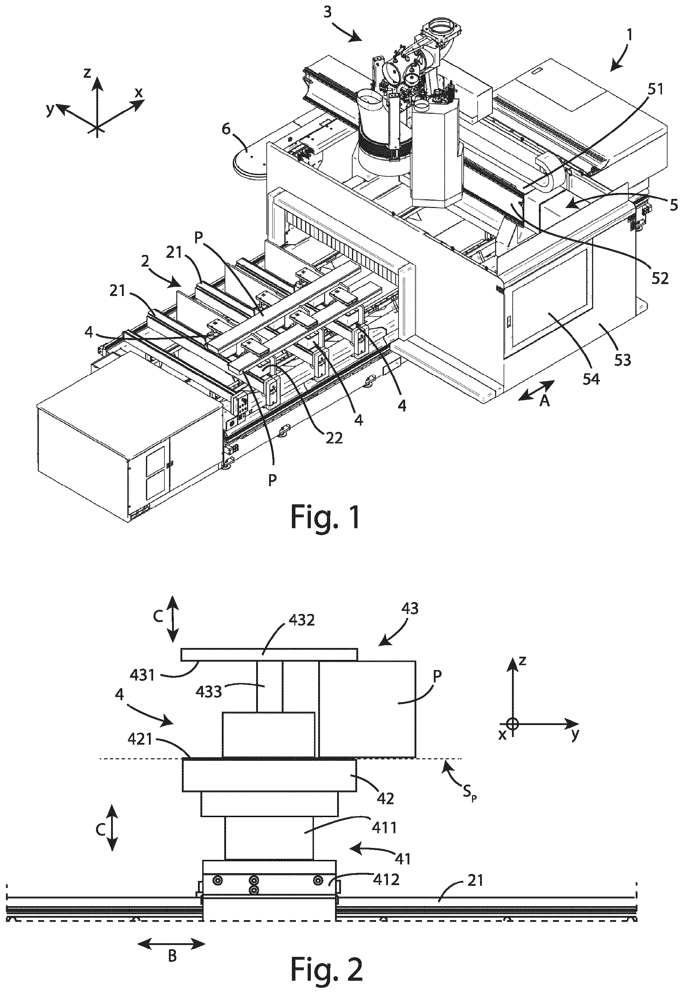

Referring to figure 1, a working center according to the invention can be observed, indicated overall with the reference number 1.

The working center 1 essentially comprises a bar table 2, made up of a plurality of bars 21, arranged in parallel, on which are arranged a plurality of clamping units 4 for the workpiece P to be machined. The working center 1 also comprises a machining group 3, for machining the workpiece P.

The working center 1 is intended to perform machining operations on wooden pieces P, typically beams, but also pieces in fiberglass, plastic and similar.

The working center 1 also comprises a base 22. The bar table 2 is arranged on the base 22, which serves as a support surface for the workpieces P to be machined. The bar table 2, as mentioned, is composed of a plurality of bars 21, on which the clamping units 4 are arranged, to support and clamp the workpieces P to be machined, to ensure stability and adequate alignment during machining.

Typically, the bar table 2 can also include vertically movable pneumatic stops, which act as stops, used to position the workpiece P to be machined and align them.

The working center 1 also comprises a bridge 5, which is movable with respect to the base 22 along a direction of movement indicated by the arrow A. In this way, the working center 1 can move the machining group 3 to adapt to different formats and sizes of workpieces P to be machined.

The bridge 5 comprises a crosspiece 51, arranged perpendicular to the direction of movement A and above the bar table 2.

A rail 52 is installed laterally on the crosspiece 51, on which a sliding shoe (not visible in the figure) is coupled, on which, in turn, the machining unit 3 is fixed.

The bridge 5 also comprises a side guard 53, which covers the machining group 3. The side guard 53 also features a window 54, to allow an operator to inspect the machining group 3 when it is active.

The machining group 3 is capable of sliding along the rail 52. The mobility of the machining group 3 along the rail 52 allows, together with the movement of the bridge 51, to move the machining group 3 on the X-Y plane, with reference to the Cartesian axes XYZ set shown in figure 1.

The machining group 3 also allows the movement of the machining tool (not shown in the figures) along the Z axis and, in some embodiments, in rotation along three rotation axes.

The machining tool can be of different types, such as a milling cutter, a drill bit, etc. In this way, the machining group 3 can perform different machining operations such as cutting, drilling or engraving on different parts of the workpiece P.

The working center 1 also comprises a tool magazine 6, to store different machining tools, such as cutters, drills, etc., and to allow tool changes when necessary.

The clamping units 4 are designed to clamp the workpieces P during the working processes by means of the machining group.

Referring to figure 2, a first embodiment of a clamping unit 4 according to the invention is observed.

The clamping unit 4 comprises a main base 41, sliding along a respective bar 21 of the bar table 2. The main base 41 comprises a slide 412, which allows sliding along the bar, ensuring precise positioning.

The support base 42 of each clamping unit 4 is designed to support the workpiece P to be machined. The support base 42 can be raised or lowered relative to the body 411 of the main base 41 by hydraulic means or compressed air pneumatic actuators or electric actuators, allowing for adjustment of the position of the workpiece P being machined or to be machined in terms of height and position.

The support surface 421 of said support base 42 allows the workpiece P to be held in position during machining.

In the clamping unit 4, the support base 42 is slidingly coupled to a respective bar 21 of the bar table 2. The support base 42 can assume a lowered position, close to said main base 41, and a raised position, in which it is spaced from the main base 41.

Each clamping unit 4 also comprises a clamp 43 for clamping the workpiece P. The clamp 43 includes a plate 432 with a clamping surface 431 and a stem 433, which allows the movement of the clamp 43 along a direction C (parallel to the Z axis) perpendicular to the passage plane Sp. The passage plane Sp is identified by the support surfaces 421 of a plurality of clamping units 4, which support and clamp a workpiece P. In this case, when not in use, the clamp 43 can assume a contracted position, in which it is located close to or adjacent to said support base 42.

When the support base 42 of a clamping unit 4 is in said lowered position and said clamp 43 is in contracted position, such clamping unit 4 can pass or be positioned under said passage plane Sp. Therefore, such clamping unit 4 can pass under the workpiece P, while it is being clamped by other clamping units 4 positioned on other bars 21 of the bar plane 2.

The operation of the work center 1 described above is as follows.

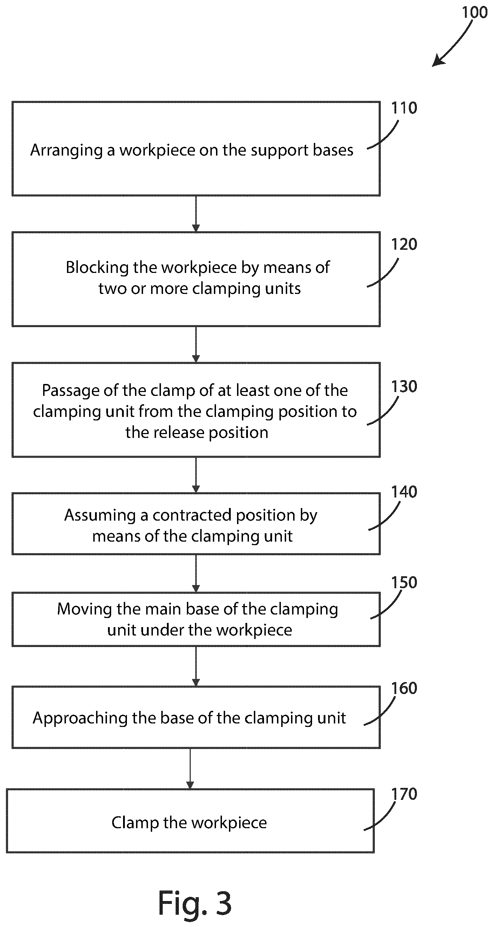

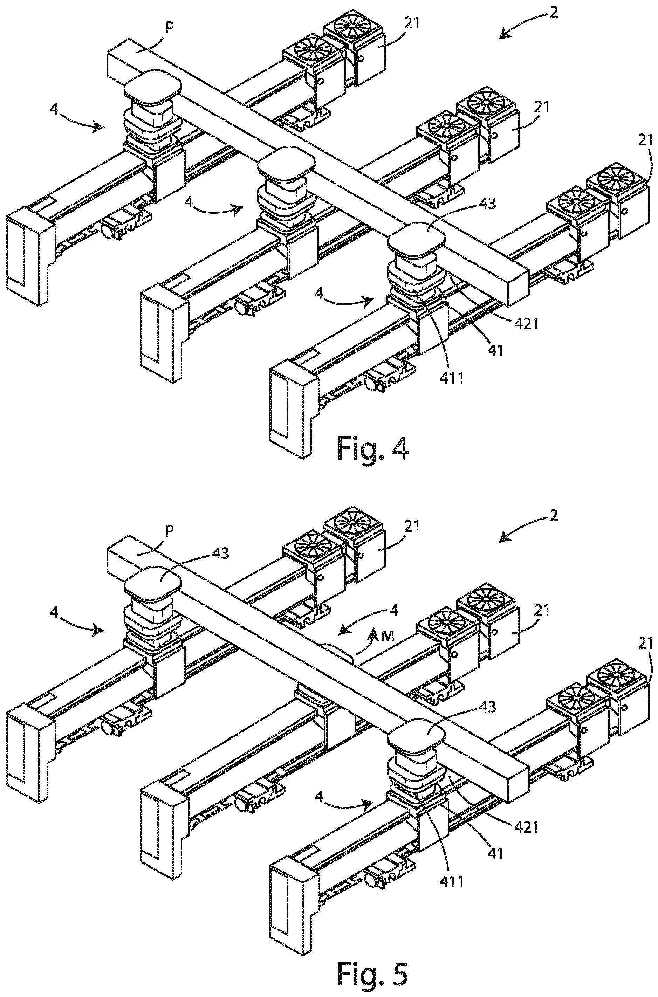

Referring to figure 3, it is seen a flowchart of the operating method of working center 1, collectively referred to as 100. Reference is also made to figures 4-8, which show the various steps of the 100 method.

The operating method 100 of the machining center 1 is divided into a series of steps, in which it is possible to optimally move the clamping units 4 thanks to the fact that they can pass under the workpiece P clamped by other clamping units 4.

The method 100 initially involves the arrangement step 110, during which the workpiece P, for example a wooden beam, is placed on the support bases 42 of two or more clamping units 4 (see figure 4).

This step allows the workpiece P to be correctly positioned in preparation for machining, ensuring that it is aligned with the tools or machining tools of the working center 1.

Next, in the clamping step 120, the workpiece P is secured in position using the clamps 43 of the two or more clamping units 4. The clamps 43 are arranged in the gripping position, clamping the workpiece P, preventing any unwanted movement (figure 3).

The following step involves the passage 130 of the clamp 43 of at least one of the clamping units 4 moving from the clamping position of the workpiece P to the release position.

This allows the clamping unit 4 to assume a contracted position (step 140), in which the clamp 43 is located under the passage plane Sp, and, therefore under the workpiece P, facilitating the access and the subsequent positioning. As can be seen in figure 5, in particular two clamping units 4, arranged on respective bars 21 of the bar plane 2, block the workpiece P, while one, always arranged on a respective bar 21, different from that of the others, passes under the workpiece P, following the path indicated by the letter M. In the contracted position of the clamping unit 4, the support base 42 is in proximity to or adjacent to said main base 41, and said clamp 43 is in proximity to or adjacent to said support base 42.

The clamping unit 4 in the contracted position passes (step 150) under said passage plane Sp and, therefore, under said workpiece P.

In the approaching step 160, the main base 41 of the clamping unit 4, which was moved in the previous step, is brought closer to the workpiece P to be machined, to prepare the clamp 43 for the subsequent clamping.

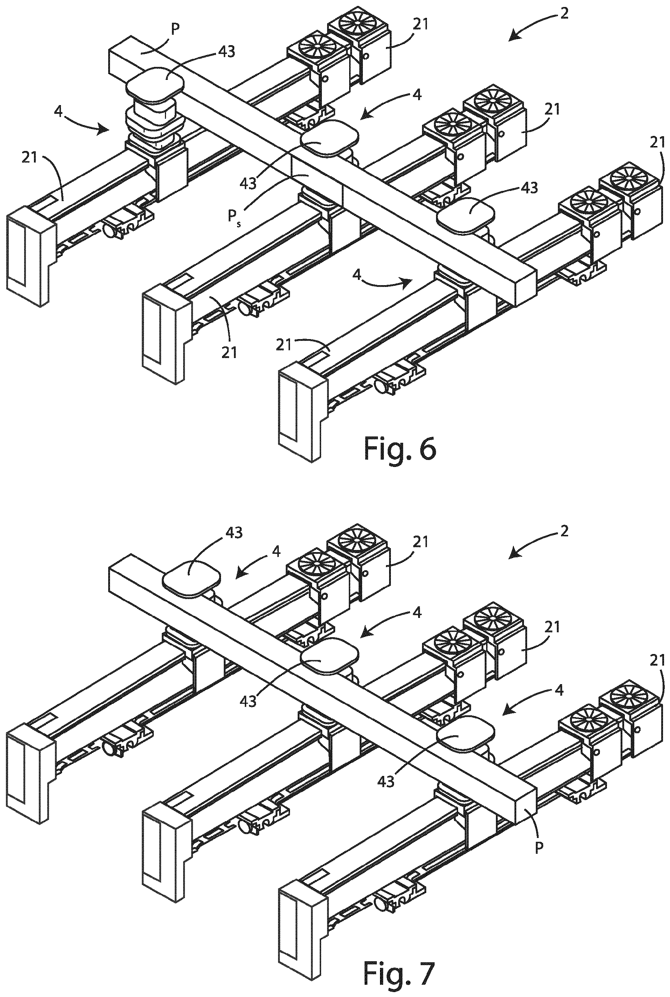

Finally, in step 170, the clamp 43 of the clamping unit 4, which has now passed under the workpiece P, after having been brought close to the workpiece P in the approaching step 160, passes from the release position to the gripping position, as can be seen in figure 6. This ensures that the workpiece P is firmly clamped and allows, for example, the machining group to carry out a machining operation on a portion of the workpiece P that was not reachable in the previous position of the clamping unit 4, such as, always referring to figure 6, the surface portion of the workpiece P indicated by Pₛ.

By moving all clamping units 4 to the opposite side of the beam, the configuration in figure 7 is achieved.

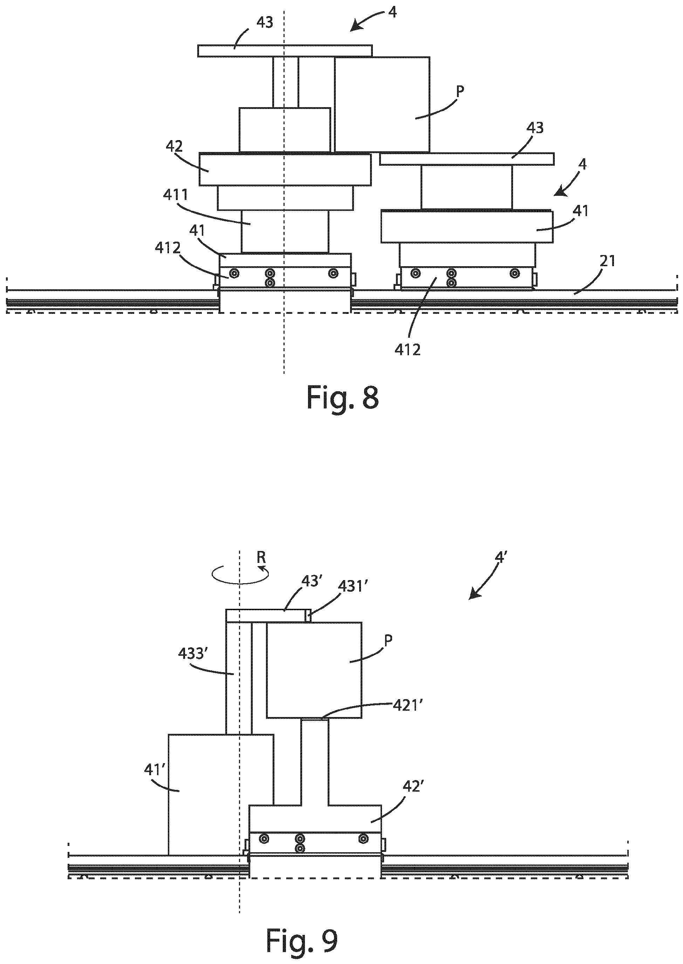

In addition to the above, figure 8 shows a further possible configuration of two clamping units 4 with respect to a workpiece P to be machined, useful in some machines, in order to free up other portions of the surface of said workpiece P.

In particular, in this configuration there is a first clamping unit 4, slidably engaged on a bar 21 in a configuration for gripping the workpiece P, and a second clamping unit 4, slidingly engaged on a respective bar 21, different from the previous bar 21, in which the support base 42 is completely lowered with respect to the body 411 and the clamp 43 is in turn lowered to pass under the workpiece P.

In this configuration, other surface portions of the workpiece P can be machined, minimizing the number of clamps 43 and their movement.

Referring now to figure 9, a second embodiment of a clamping unit 4' is observed.

In this case, the clamp 43' can also rotate by means of the stem 433' with respect to the support base 42', around a rotation axis R perpendicular to the bar table 2, allowing further flexibility in the clamping position.

In said second embodiment, said clamping unit 4' has the support base 42' separate from said main base 41'. The support base 42' is in turn slidingly coupled with a respective bar 21 of the bar table 2.

The support base 42' has on its top the support surface 421', always intended to support the workpiece P.

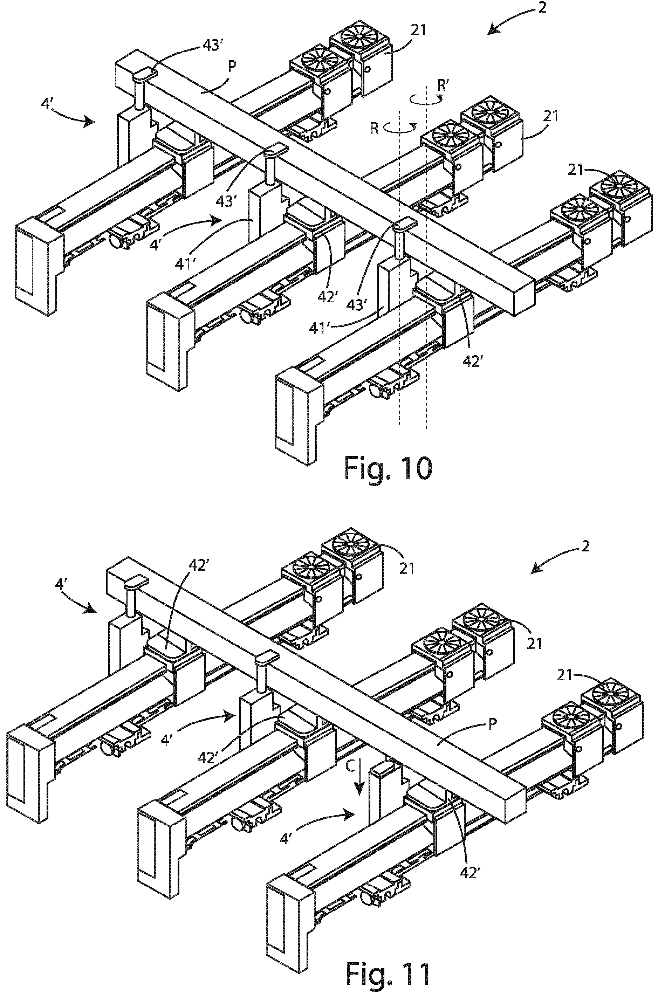

Figures 10-14 show the operation of the clamping unit 4' according to the second embodiment.

The clamping method 100 of the working center 1 equipped with the clamping units 4' according to the second embodiment is substantially similar to that described in relation to figure 3, except that during the movement step 150 the support base 42' is not moved. Furthermore, in step 170 the clamp 43' is rotated around the rotation axis R, before clamping the workpiece P again in the new position.

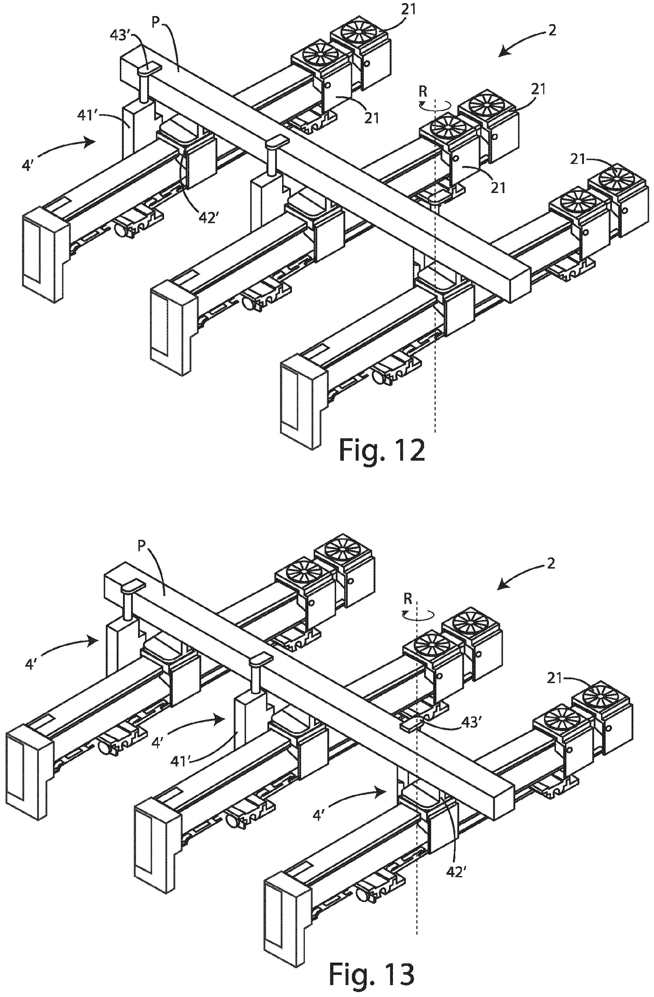

In particular, with reference to figure 3 and figures 10-14, figure 10 refers to steps 110, 120, and 130, figure 11 refers to step 140, figure 12 refers to step 150, and figure 13 refers to steps 160 and 170.

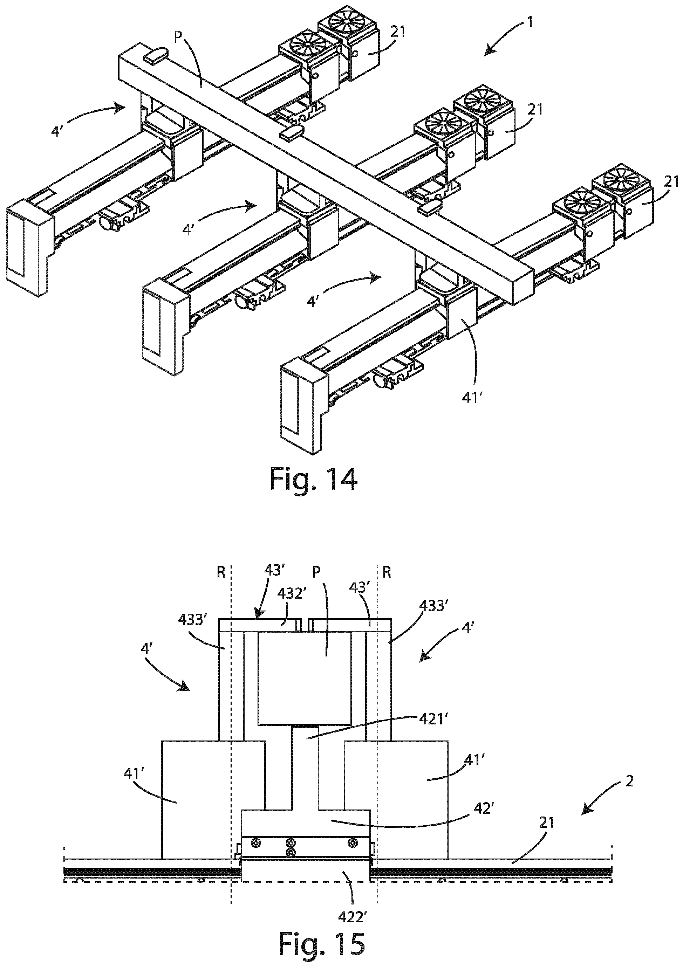

Still referring to figure 10, in a further embodiment, the main base 41' can rotate around said support base 42' around a further rotation axis R', parallel to said rotation axis R of the clamp 43'.Figure 14 shows the positioning of the clamping units 4' on the same side of the workpiece P.

Finally, in figure 15 it can be observed the arrangement of two clamping units 4'. One of the two clamping units 4' is arranged behind the bar 21, on which the other clamping unit 4' and the support base 42' are arranged.

In this case, the workpiece P is supported on the support surface 421'.

### Advantages

An advantage of the present invention is that it significantly increases productivity when machining beams or fixtures using tabletops or bar pantographs. The single-row clamp configuration allows for double the number of workpieces that can be machined within the same machining cycle compared to traditional systems with two rows of clamps. This increase in efficiency reduces machine downtime and increases overall production, offering a significant competitive advantage for users.

Another advantage of this invention is improved accessibility and workspace management. By eliminating a row of clamps on the working surface, the available space for tool passage is increased, facilitating maintenance and setup operations.

Another advantage of the present invention is that it allows the design of work machines with smaller layouts. This result translates into a reduction of the footprint required for machine installation, making it ideal for workshops with limited space or for integration into more compact production lines.

Finally, a further advantage of the invention is the operational flexibility introduced by the new clamps. The clamps are equipped with a third movement that allows them to fold in on themselves and pass under the workpiece without the need to remove or reposition the workpiece. This increases the efficiency of workpiece exchange operations and reduces the risk of operational errors, further contributing to increased productivity and reduced production costs.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working center (1) for machining workpieces (P) such as wood panels, solid wood beams, plastic, fiberglass, and the like, comprising:
a bar table (2), comprising a plurality of bars (21), intended to support the workpieces (P) to be machined;
a machining unit (3) arranged above said bar table (2) and movable relative to it, wherein said machining unit (3) comprises at least one machining tool (31) for machining said workpieces (P) fixed on said bar table (2); and
a plurality of clamping units (4, 4'), slidably coupled to one of said bars (21) of said bar table (2), wherein each of said clamping units (4, 4') is suitable for clamping a workpiece (P) to be machined by said machining unit (3);
**characterized in that** each of said clamping units (4, 4') comprises:
a main base (41, 41'), slidably coupled to a respective bar (21) of said bar table (2);
a support base (42, 42'), having a support surface (421, 421'), for supporting a workpiece (P) to be clamped and machined, wherein said support surface (421, 421'), when the workpiece (P) is supported on it, defines a passage plane (Sp),
a clamp (43, 43') for clamping said workpiece (P),
having a clamping surface (431, 431'), which can be positioned facing said support surface (421, 421'),
wherein said clamp (43, 43') is movable relative to said support base (42, 42'), to assume a clamping position, in which it clamps the workpiece (P) to be machined between said support surface (421, 421') of said support base (42, 42') and said clamping surface (431, 431'), and a release position, and
wherein said clamping unit (4, 4') assumes a contracted position in which said clamp (43, 43') is located below said passage plane (Sp), so as to pass or be positioned under said workpiece (P) when it is positioned on the support surface (421, 421') of said support base (42, 42').

2. Working center (1) according to claim 1, **characterized in that** said clamp (43, 43') comprises
a plate (432, 432'), on which said clamping surface (431, 431') is provided, and
a stem (433, 433'), coupled to said plate (432, 432'), for moving said clamp (43, 43') relative to said support base (42, 42') along a direction (C), wherein said direction (C) is perpendicular or oblique to said surface defined by said support surface (421, 421').

3. Working center (1) according to the preceding claim, **characterized in that** said clamp (43') is rotatable relative to said main base (41') around a rotation axis (R) arranged perpendicularly to said bar table (2).

4. Working center (1) according to the preceding claim, **characterized in that** said main base (41') rotates around said support base (42'), around an additional rotation axis (R') parallel to said rotation axis (R) of said clamp (43').

5. Working center (1) according to any one of the preceding claims, **characterized in that** said main base (41) comprises
a body (411) and
a slide (412) fixed to said body (411), slidably couplable to a bar (21).

6. Working center (1) according to the preceding claim, **characterized**
**in that** said support base (42) of said clamping unit (4) is coupled to said main base (41) and is slidable relative to said body (411), so as to assume a lowered position, in which it is near said main base (41), and a raised position, in which it is spaced from said main base (41), and
**in that** when said clamp (43) is in said contracted position and said support base (42) is in said lowered position, said clamping unit (4) is able to pass or be positioned below said passage plane (Sp), so as to pass or be positioned under said workpiece (P) when it is positioned on the support surface (421) of said support base (42).

7. Working center (1) according to any one of the preceding claims, **characterized**
**in that** said clamp (43, 43') is coupled to said main base (41, 41'), to assume said clamping position, in which it clamps the workpiece (P) to be machined between said support surface (421, 421') of said support base (42, 42') and said clamping surface (431, 431'), and a release position, and
**in that** said support base (42, 42') is slidably coupled to a respective bar (21) of said bar table (2).

8. Working center (1) according to any one of the preceding claims, **characterized in that** it comprises
a base (22), on which said bar table (2) is arranged,
a bridge (5), movable relative to said base (22) along a movement direction (A), comprising
a crossbeam (51), arranged perpendicularly to said movement direction (A), wherein said bar table (2) is arranged below said crossbeam (51),
a rail (52), arranged on said crossbeam (51), wherein said machining unit (3) is slidably movable on said rail (52).

9. Clamping unit (4, 4') for clamping workpieces (P) such as wood panels, solid wood beams, plastic, fiberglass, and the like, couplable to a working center (1) comprising a bar table (2) having a plurality of bars (21), intended to support the workpieces (P) to be machined, comprising:
a main base (41, 41'), slidably coupled to a respective bar (21) of said bar table (2);
a support base (42, 42'), having a support surface (421, 421'), for supporting a workpiece (P) to be clamped and machined, wherein said support surface (421, 421'), when the workpiece (P) is supported on it, defines a passage plane (Sp), and
a clamp (43, 43') for clamping said workpiece (P),
having a clamping surface (431, 431'), which can be positioned facing said support surface (421, 421'),
wherein said clamp (43, 43') is movable relative to said support base (41, 41'), so as to assume a clamping position, in which it clamps the workpiece (P) to be machined between said support surface (421, 421') of said support base (42, 42') and said clamping surface (431, 431'), and a release position, and
wherein said clamp (43, 43') is configured to assume a contracted position, in which said clamp (43, 43') is located below said passage plane (Sp), so as to pass or be positioned under said workpiece (P) when it is positioned on the support surface (421, 421') of said support base (42, 42').

10. Clamping unit (4, 4') according to the preceding claim, **characterized in that** said clamp (43, 43') comprises
a plate (432, 432') on which said clamping surface (431, 431') is provided, and
a stem (433, 433'), coupled to said plate (432, 432'), for moving said clamp (43, 43') relative to said support base (42, 42') along a direction (C), wherein said direction (C) is perpendicular to said surface defined by said support surface (421, 421').

11. Clamping unit (4') according to any one of claims 9 or 10, **characterized in that** said clamp (43') is rotatable relative to said main base (41') around a rotation axis (R) arranged perpendicularly to said bar table (2).

12. Clamping unit (4) according to any one of claims 9-11, **characterized in that** said main base (41) comprises
a body (411) and
a slide (412) fixed to said body (411), slidably couplable to a bar (21).

13. Clamping unit (4) according to the preceding claim, **characterized**
**in that** said support base (42) of said clamping unit (4) is coupled to said main base (41) and is slidable relative to said body (411), so as to assume a lowered position, in which it is near said main base (41), and a raised position, in which it is spaced from said main base (41), and
**in that** when said clamp (43) is in said contracted position and said support base (42) is in said lowered position, said clamping unit (4) is able to pass or be positioned below said passage plane (Sp), so as to pass or be positioned under said workpiece (P) when it is positioned on the support surface (421) of said support base (42).

14. Clamping unit (4, 4') according to any one of claims 9-12, **characterized**
**in that** said clamp (43, 43') is coupled to said main base (41, 41'), to assume said clamping position, in which it clamps the workpiece (P) to be machined between said support surface (421, 421') of said support base (42, 42) and said clamping surface (431, 431'), and a release position, and
**in that** said support base (42, 42') is slidably coupled to a respective bar (21) of said bar table (2).

15. Camping method (100) for clamping a workpiece (P) on a work table (2) of a working center (1) according to any one of the preceding claims 1-8, comprising the following steps:
placing (110) a workpiece (P), such as a wooden beam, on the support bases (42, 42') of two or more clamping units (4, 4');
clamping (120) said workpiece (P) to be machined by means of said two or more clamping units (4, 4') by positioning the respective clamps (43, 43') in said clamping position;
moving (130) from said clamping position to said release position the clamp (43, 43') of at least one of said clamping units (4, 4');
assuming (140) a contracted position by means of said one or more clamping units (4, 4') of the previous step;
moving (150) the main base (41, 41') of said at least one of said clamping units (4, 4') in said contracted position under said passage plane (Sp) and thus under said workpiece (P);
bringing (160) the main base (41, 41') of at least one of said clamping units (4, 4') moved in said moving step (130) to said workpiece (P) to be machined; and
moving (170) said clamp (43, 43') corresponding to said main base (41, 41') of at least one of said clamping units (4, 4') brought to said workpiece (P) in said bringing step (140), from said release position to said clamping position.

16. Clamping method (100) according to the preceding claim, when dependent on claim 6, **characterized in that** in said moving step (130) said support base (42) is positioned in said lowered position.

17. Clamping method (100) according to any one of claims 15 or 16, **characterized in that** said moving step (170) comprises the sub-step of rotating said clamp (43').
